# EUROPÄISCHE PATENTSCHRIFT

(11) **EP 3 908 796 B1**
(45) Veröffentlichungstag und Bekanntmachung des Hinweises auf die Patenterteilung: **21.02.2024**
(21) Anmeldenummer: 20700866.5
(22) Anmeldetag: 08.01.2020
(51) Int. Cl.: F26B 17/26, F26B 25/00, B01D 46/00

(54) **VERFAHREN UND VORRICHTUNG ZUR KONTINUIERLICHEN TROCKNUNG VON SCHÜTTGUTERN**
PROCESS AND APPARATUS FOR CONTINUOUSLY DRYING BULK GOODS
PROCÉDÉ ET DISPOSITIF POUR LE SÉCHAGE EN CONTINU DE MARCHANDISES EN VRAC

(30) Priorität: 08.03.2019 DE 102019106026
(43) Veröffentlichungstag der Anmeldung: 17.11.2021
(73) Patentinhaber: L. B. Bohle Maschinen und Verfahren GmbH, 59320 Ennigerloh (DE)
(72) Erfinder: ALTMEYER, Andreas, 48163 Münster (DE); MEIER, Robin, 44229 Dortmund (DE); BOHLE, Lorenz, 59320 Ennigerloh (DE)
(74) Vertreter: Busse & Busse
(86) Internationale Anmeldenummer: PCT/EP2020/050241
(87) Internationale Veröffentlichungsnummer: WO 2020/182352

(56) Entgegenhaltungen:
- EP-A2- 1 878 489
- WO-A1-2015/089572
- DE-U1- 9 412 403
- DE-U1- 29 611 972
- GB-A- 2 088 244
- JP-A- S61 295 486
- US-A- 5 064 454
- US-A- 5 549 734

## Beschreibung

Die Erfindung bezieht sich zunächst auf ein Verfahren zur Trocknung von feuchten Produkten, insbesondere von feuchten Granulaten zur Herstellung von pharmazeutischen Erzeugnissen, die in einem Reaktorraum eines Schüttguttrockners einem von einem fluiden Medium durchströmbaren Anströmboden aufgegeben werden und die von dem fluiden Medium durchströmt und erwärmt werden, wobei der Anströmboden über einen Schwingantrieb zur Förderung des Produktes von einem Produkteinlass zu einem Produktauslass in Schwingungen versetzt wird und das fluide Medium nach Durchströmen des Anströmbodens und des Produktes voneinander getrennten, einem Auslass vorgeordneten Kammern und dem Auslass zugeführt werden.

Des Weiteren bezieht sich die Erfindung auf einen Schüttguttrockner zur Durchführung des Verfahrens mit einem in einem Behälter vorgesehenen Reaktorraum, der von einem fluiden Medium durchströmbar ist, wobei der Reaktorraum einen für das fluide Medium durchlässigen Anströmboden aus insbesondere einem feinen Gewebe - und/oder einem Edelstahlmaterial aufweist und der Behälter mit einem Produkteinlass und einem Produktauslass versehen ist, wobei das Produkt in dem Reaktorraum von dem fluiden Medium beaufschlagbar ist und der Reaktorraum einen Auslass für das fluide Medium aufweist, wobei der Reaktorraum in Strömungsrichtung für das fluide Medium oberhalb des Anströmbodens zumindest zwei nebeneinander angeordnete, dem einem Auslass für das fluide Medium vorgeordnete Kammern aufweist und der Anströmboden über einen Schwingantrieb zur Förderung des Produktes vom Produkteinlass zum Produktauslass in Schwingungen versetzbar ist. Schüttguttrockner werden für vielfältige Aufgaben genutzt, um z. B. Granulate für die pharmazeutische Industrie zu erzeugen und zu trocknen z. B. für die nachfolgende Verarbeitung zu pharmazeutischen Tabletten. Darüber hinaus gibt es vielfältige weitere Anwendungsfälle für derartige Schüttguttrockner, um feuchtes Ausgangsmaterial zu trocknen und/oder beispielsweise ein festes Material nachfolgend zu befilmen. In zunehmendem Maße werden solche Schüttguttrockner kontinuierlich betrieben, können aber auch diskontinuierlich arbeiten.

DE 9412403 U1 offenbart ein Verfahren zur Trocknung von feuchten Produkten.

Aus dem DE 296 11 972 U1 ist eine Vorrichtung und ein Verfahren zum Trocknen von Schüttgütern der eingangs genannten Art bekannt. Dabei wird aus einem Vorratsbehälter das zu trocknende feuchte Granulat einem Anströmboden zugeführt, der über einen Schwingantrieb in Schwingungen versetzt wird, so dass das zu trocknende Schüttgut bzw. Granulat einem Produktauslass zugeführt werden kann. Oberhalb des Antrömbodens sind verschiedene Kammern angeordnet, in denen in vertikaler Ausrichtung Filterkartuschen angeordnet werden können. In einem ersten Anströmbereich wird über eine Heizvorrichtung erhitzte Luft dem Schüttgut zugeführt. Diesem ersten Anströmbereich kann ein weiterer Anströmbereich zugeordnet sein. Der erwärmte Luftstrom kann nach Passieren des Produktstromes und der entsprechenden Filterelemente einem gemeinsamen Auslass für das fluide Medium zugeführt werden. In weiteren Bereichen kann sich eine Kühlzone anschließen, über die Kaltluft dem geförderten Produktstrom zugeführt werden kann. Nachteilig hierbei ist, dass für einen kontinuierlichen Betrieb eines derartigen Verfahrens und einer derartigen Vorrichtung die Filterkartuschen sehr schnell eine nur noch geringe Wirkung aufweisen, da sich Filtermaterialien sehr schnell zusetzen. Das hat einen zeitaufwändigen Austausch der Filterkartusche zur Folge.

Es ist Aufgabe der vorliegenden Erfindung, ein Verfahren und einen Schüttguttrockner zur Durchführung des Verfahrens vorzuschlagen, die mit hohem Wirkungsgrad geeignet sind, auch eine kontinuierliche Trocknung eines feuchten Granulates insbesondere für die pharmazeutische Industrie zur Verfügung zu stellen.

Zur Lösung dieser Aufgabe umfasst das Verfahren der eingangs genannten Art das Merkmal, dass vorwählbar eine von zumindest zwei voneinander getrennten Kammern zum Auslass hin durch Betätigung eines Absperrorgans geschlossen wird, dass nach Betätigung des Absperrorgans die Zuführung des fluiden Mediums zum Auslass über eine nicht von einem anderen Absperrorgan verschlossene Kammer erfolgt und dass ein der abgesperrten Kammer zugeordnetes Filterelement für das fluide Medium nach Betätigung des Absperrorgans dieser Kammer im Schließsinn über einen Impulsgeber wie z. B. einen Ultraschallerzeuger unter fortlaufender Zuführung des fluiden Mediums zu einer nicht abgesperrten Kammer gereinigt wird. Damit ist zunächst ein Verfahren geschaffen, mit dem sich feuchte Produkte, insbesondere feuchtes Granulat zur Herstellung von pharmazeutischen Produkten, in einem kontinuierlich arbeitenden Prozess hervorragend trocknen lassen, selbst dann, wenn dieses als sehr feines, getrocknetes Pulver den Schüttgutreaktor zu verlassen hat. Zur Reinigung von Filterelementen braucht das Verfahren nicht unterbrochen werden, weil durch zumindest eine zum Auslass hin für das fluide Medium offene Kammer mit dem dieser Kammer zugeordneten Filterelement das fluide Medium, also z. B. erwärmte Luft, gereinigt zum Auslass geführt werden kann. Die Reinigung der Filter der einzelnen Kammern, also bei der kleinsten Anlage mit zwei Kammern, bevorzugt aber drei oder mehr Kammern, können die einzelnen Filterelemente nacheinander und zeitlich abwechselnd von einem jeweils diesem Filterelement zugeordneten Impulsgeber wie einen Ultraschallerzeuger, Drucklufterzeuger oder dgl. Vibrationserzeuger gereinigt werden. Dies kann in vorgebbaren Zeitintervallen geschehen, beispielsweise über eine Steuereinheit.

Parallel werden die jeweiligen Absperrorgane betätigt, so dass ein Impulsgeber erst dann in Betrieb genommen wird, wenn das Absperrorgan seiner Kammer geschlossen ist. Der dann aktivierte Impulsgeber erzeugt entsprechende Schwingungen am Filterelement, so dass sich dort anhaftende Partikel lösen und in den Produktstrom innerhalb des Reaktorraumes auf den Anströmboden zurückfallen. Diese Reinigung der Filterelemente ist mit hohem Wirkungsgrad durchzuführen. Der kontinuierliche Trocknungsprozess ist durch die abwechselnden Reinigungszyklen der jeweiligen Filterelemente in keiner Weise beeinträchtigt. Dies führt zu einer hohen Trocknungsleistung bei minimalen und kaum messbaren Produktverlusten bei nicht kontaminierter Abluft.

Die Filterelemente sind dazu bevorzugterweise als Einzelfilterelemente ausgebildet und am Einlass einer jeden Kammer aufgespannt, so dass sie sich im Wesentlichen parallel zum Anstömboden erstrecken. Sie können unterschiedliche Strukturen und Geometrien aufweisen. Im einfachsten Falle genügt ein aufgespanntes Filterelement, das sich innerhalb der Einlassöffnung einer Kammer erstreckt, die beispielsweise quadratisch oder rechteckig gestaltet ist, so dass das Filterelement in diese quadratische oder rechteckige Öffnung der Kammer eingesetzt werden kann.

Bevorzugterweise ist ein Filterelement elastisch an Kammerwänden abgestützt. Die Filterelemente können allerdings auch eine andere Querschnittsstruktur haben, um die Filterfläche zu vergrößern. So können sie gegensinnig über ihre Längs- und Quererstreckung abgekröpft ausgebildet sein mit gegensinnig z. B. gerundeten Erhebungen und Vertiefungen, aber auch sonstige die Filterfläche vergrößernde Geometrien aufweisen.

Bevorzugterweise wird das dem Schüttguttrockner aufzugebende Produkt über einen Doppelschneckengranulator zugeführt, der einen Einlass für ein pulverförmiges Produktausgangsmaterial und einen Einlass für eine Flüssigkeit hat. Ausgangsseitig kann das Produkt über eine Zellenradschleuse aus dem Schüttguttrockner abgeführt werden.

Ein Schüttguttrockner bzw. eine Vorrichtung zur Durchführung des erfindungsgemäßen Verfahrens umfasst das Merkmal, dass jeder der Kammern ein Absperrorgan zugeordnet ist und die Kammer für einen Durchfluss für das fluide Medium zu öffnen und zu schließen ist, wobei über das für eine Durchströmung durch das fluide Medium durch das Absperrorgan geschlossenen Kammer eine jeweils andere Kammer über das dieser Kammer zugeordnete Absperrorgan geöffnet ist bzw. bleibt, wobei jeder Kammer ein Impulsgeber wie z. B. ein Ultraschallerzeuger und ein Filterelement zugeordnet sind und das Filterelement der Kammer über den Impulsgeber dieser Kammer bei geschlossenem Absperrorgan dieser Kammer gereinigt werden kann.

Durch die intervallmäßige aber stets durchgeführte Reinigung der einzelnen Filterelemente arbeiten diese außerordentlich effizient und weisen hohe Standzeiten auf. Es kommt nicht zu Verblockungen in den jeweiligen Filterelementen. Durch die Impulserzeuger (z. B. Ultraschallerzeuger) werden Produktreste aus den Filterelementen dem Produktstrom zugegeben.

Hinsichtlich weiterer Ausgestaltungen der Erfindung wird auf weitere Unteransprüche verwiesen. Des Weiteren wird auf die nachfolgende Beschreibung zur weiteren Erläuterung der Erfindung verwiesen und die nachfolgende Zeichnung. In der Fig. ist ein Ausführungsbeispiel eines Schüttguttrockners dargestellt, mit dem das erfindungsgemäße Verfahren durchgeführt werden kann.

Allgemein mit 1 ist der Schüttguttrockner beziffert, der einen Reaktorraum 2 aufweist mit einem Produkteinlass 3 und einem Produktauslass 4, dem eine Zellenradschleuse 5 vorgeordnet ist. Der Reaktorraum 2 hat einen weiteren Einlass 6, über den erwärmte Luft zugeführt werden kann, die von einem Gebläse 7 einer Heizvorrichtung 8 zugeführt und dann dem Einlass 6 aufgegeben wird.

Über einen Schwingantrieb 9 ist der Reaktor 2 in Schwingungen zu versetzen. Hierbei handelt es sich um einen Schwingungsgeneratormotor, der den Anströmboden 14 in Längs- und gegebenenfalls auch ein Querschwingungen versetzen kann. Der Reaktor ist federnd abgestützt und zwar über Spiralfedern 10. Dem Produkteinlass 3 vorgeordnet ist ein Doppelschneckengranulator 11 mit zwei Einlässen, nämlich einmal einem Einlass 12 für ein pulverförmiges Aufgabeprodukt und einem Einlass 13 für eine Flüssigkeit. Beides zusammen wird in dem Doppelschneckengranulator 11 zu einem feuchten Produkt, also einem feuchten Granulat verarbeitet und kann so dem Schüttguttrockner 1 aufgegeben werden. Dieses wird dem Anströmboden 14 aufgegeben, der von dem Schwingantrieb 9 in schwingenden Bewegungen versetzt wird und der in Förderrichtung 15 das zu trocknende und getrocknete Granulat hin zum Auslass 4 fördert.

Der Anströmboden 14 ist luftdurchlässig ausgebildet, so dass sich auf diesem ein Festbett bildet unter gleichzeitiger Förderung in Richtung des Pfeiles 15 aber auch in Querrichtung dazu schwingen kann. Das führt dazu, dass das zu trocknende Produkt außerordentlich effizient von der eingebrachten erwärmten Luft durchströmt werden kann.

Oberhalb des Anströmbodens 14 sind im gezeigten Ausführungsbeispiel drei Kammern vorgesehen, nämlich die Kammer 16.1, die Kammer 16.2 und die Kammer 16.3. Jeder dieser Kammern ist ein separates Filterelement zugeordnet, so dass insgesamt drei Filterelemente vorgesehen sind, nämlich die Filterelemente 17.1, 17.2 und 17.3. Diese Filterelemente überspannen den gesamten Einlass der Kammern 16.1, 16.2 und 16.3 und sind gegensinnig gewölbt bzw. abgekröpft mit Erhebungen und Vertiefungen ausgebildet, so dass sich eine sehr große Filterfläche, bezogen auf die Abmessungen des Einlasses der jeweiligen Kammern 16.1, 16.2 und 16.3, ergibt. Diese sind innerhalb der Einlässe der Kammern 16.1, 16.2 und 16.3 elastisch verbunden mit den Kammerwänden und haben dazu einen die Filtermaterialien aufnehmenden Rahmen.

Die jeweiligen Kammern 16.1, 16.2 und 16.3 haben jeweils Auslässe 18.1, 18.2, 18.3 für das abzuführende fluide Medium, die alle einem Auslass 19 zugeordnet sind, dem ein Gebläse 20 vorgeordnet ist. Jeder dieser Auslässe 18.1, 18.2, 18.3 hat ein Absperrorgan 21.1, 21.2 und 21.3. Zudem ist jeweils ein Ultraschallerzeuger für jedes Filterelement 16.1, 16.2 und 16.3 vorgesehen, nämlich die Ultraschallerzeuger 22.1, 22.2 und 22.3, die von einer Steuereinheit 24 zentral angesteuert sind, so dass eine Reinigung eines Filterelementes 17.1 oder 17.2 oder 17.3 dann erfolgt, wenn das jeweilige Absperrorgan 21.1, 21.2 oder 21.3 der jeweiligen Kammer 16.1, 16.2 oder 16.3 geschlossen ist, wonach der dieser Kammer zugeordnete Ultraschallerzeuger 22.1, 22.2, 22.3 aktiviert wird und das jeweilige Filterelement 17.1, 17.2 oder 17.3 in Schwingungen versetzt. Dies erfolgt getaktet jeweils nacheinander und mithin abwechselnd in vorgebbaren Betriebsintervallen, so dass der kontinuierliche Betrieb fortgeführt werden kann, aber jeweils eine Kammer 16.1, 16.2 oder 16.3 aus dem Betrieb genommen wird durch Schließen des zugeordneten Absperrorgans, wonach dann das entsprechende Filterelement 17.1, 17.2 oder 17.3 gereinigt wird. Ist z. B. die Kammer 16.1 abgeschaltet, wird die abzuführende Luft über die beiden anderen Kammern 16.2 und 16.3 dem Auslass 19 zugeführt.

Erfindungsgemäß ist eine Steuereinheit vorgesehen, um den Innendruck im Reaktorraum 2 in Abhängigkeit vorgebbarer Betriebsparameter zu steuern. Dabei handelt es sich um die Steuerung des Innendruckes oberhalb des Anströmbodens 14 und unterhalb der Filterelemente 17.1, 17.2 und 17.3.

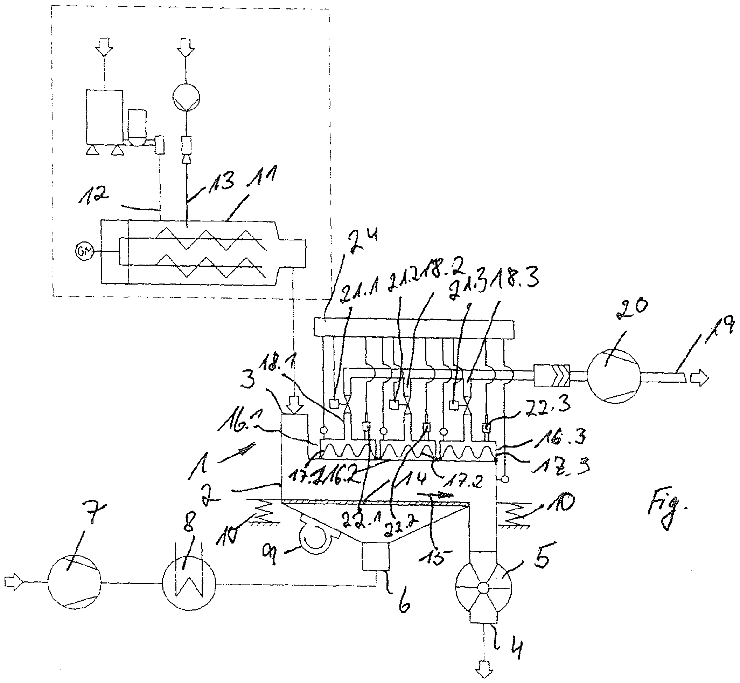

## Patentansprüche

1. Verfahren zur Trocknung von feuchten Produkten, insbesondere von feuchten Granulaten zur Herstellung von pharmazeutischen Erzeugnissen, die in einem Reaktorraum (2) eines Schüttguttrockners (1) von einem fluiden Medium durchströmt und erwärmt werden und die einem von dem fluiden Medium durchströmbaren Anströmboden (14) aufgegeben werden, wobei der Anströmboden (14) über einen Schwingantrieb (9) zur Förderung des Produktes von einem Produkteinlass (3) zu einem Produktauslass (4) in Schwingungen versetzt wird und das fluide Medium nach Durchströmen des Anströmbodens (14) und des Produktes voneinander getrennten, einem Auslass (19) vorgeordneten Kammern (16.1, 16.2, 16.3) und dem Auslass (19) zugeführt werden, **dadurch gekennzeichnet, dass** vorwählbar eine von zumindest zwei voneinander getrennten Kammern (16.1, 16.2, 16.3) zum Auslass (19) hin durch Betätigung eines Absperrorgans (21.1, 21.2, 21.3) geschlossen wird, dass nach Betätigung des Absperrorgans (21.1, 21.2, 21.3) die Zuführung des fluiden Mediums zum Auslass (19) über eine nicht von einem anderen Absperrorgan (21.1, 21.2, 21.3) verschlossene Kammer (16.1, 16.2, 16.3) erfolgt, und dass ein der abgesperrten Kammer (16.1, 16.2, 16.3) zugeordnetes Filterelement (17.1, 17.2, 17.3) für das fluide Medium nach Betätigung des Absperrorgans (21.1, 21.2, 21.3) dieser Kammer (16.1, 16.2, 16.3) im Schließsinn über einen Impulsgeber (22.1, 22.2, 22.3) unter fortlaufender Zuführung des fluiden Mediums zu einer nicht abgesperrten Kammer (16.1, 16.2, 16.3) gereinigt wird, wobei über ein Steuergerät (24) der Druck innerhalb des Schüttguttrockners (1) oberhalb des Anströmbodens (14) und unterhalb des Filterelementes (17.1, 17.2, 17.3) in Abhängigkeit von vorgebbaren Betriebsparametern gesteuert wird.

2. Verfahren nach Anspruch 1, **dadurch gekennzeichnet, dass** als Impulsgeber (21.1, 21.2, 21.3) ein Ultraschallerzeuger, ein Drucklufterzeuger o. dgl. Vibrationserzeuger verwendet wird.

3. Verfahren nach Anspruch 1 oder 2, **dadurch gekennzeichnet, dass** das fluide Medium mehr als zwei dem Anströmboden (14) nachgeordneten Kammern (16.1, 16.2, 16.3) zugeführt wird.

4. Verfahren nach einem der Ansprüche 1 bis 3, **dadurch gekennzeichnet, dass** das fluide Medium vor Eintritt in den Auslass (19) den Kammern (16.1, 16.2, 16.3) zugeordneten Filterelementen (17.1, 17.2, 17.3) zugeführt wird, wobei das jeweilige Filterelement (17.1, 17.2, 17.3) jeder Kammer (16.1, 16.2, 16.3) unabhängig von dem Filterelement (17.1, 17.2, 17.3) einer anderen Kammer (16.1, 16.2, 16.3) von dem fluiden Medium durchströmt wird bei geöffnetem Absperrorgan (21.1, 21.2, 21.3) der jeweiligen Kammer (16.1, 16.2, 16.3).

5. Verfahren nach einem der Ansprüche 1 bis 4, **dadurch gekennzeichnet, dass** das jeweilige Filterelement (17.1, 17.2, 17.3) einer jeden Kammer (16.1, 16.2, 16.3) durch einen diesem Filterelement (17.1, 17.2, 17.3) zugeordneten Ultraschallerzeuger (22.1, 22.2, 22.3) nach Betätigung des Absperrorgans (21.1, 21.2, 21.3) in dieser jeweiligen Kammer (16.1, 16.2, 16.3) im Schließsinn gereinigt wird.

6. Verfahren nach Anspruch 5, **dadurch gekennzeichnet, dass** die Absperrorgane (21.1, 21.2, 21.3) der Kammer (16.1, 16.2, 16.3) in Zeitintervallen abwechselnd im Schließsinn betätigt werden und nach Betätigung der jeweiligen Absperrorgane (21.1, 21.2, 21.3) im Schließsinn der jeweiligen Ultraschallerzeuger (22.1, 22.2, 22.3) der abgesperrten Kammer (16.1, 16.2, 16.3) für ein Zeitintervall aktiviert wird.

7. Verfahren nach einem der Ansprüche 1 bis 6, **dadurch gekennzeichnet, dass** der Anströmboden (14) über den Schwingantrieb (9) in Schwingbewegungen in Förderrichtung (15) des Produktes und quer zur Förderrichtung (15) des Produktes versetzt wird.

8. Verfahren nach einem der Ansprüche 1 bis 7, **dadurch gekennzeichnet, dass** dem Schüttguttrockner (1) das aufzugebende Produkt über einen Doppelschneckengranulator (11) zugeführt wird, dem über voneinander getrennte Eingänge (12, 13) ein pulverförmiges Produktausgangsmaterial und eine Flüssigkeit zur Erzeugung eines feuchten Granulates zugeführt wird.

9. Verfahren nach einem der Ansprüche 1 bis 8, **dadurch gekennzeichnet, dass** das getrocknete Produkt über eine Zellenradschleuse (5) einem Schüttgutreaktorauslass (4) zugeführt wird.

10. Schüttguttrockner (1), insbesondere zur Durchführung des Verfahrens nach einem der Ansprüche 1 bis 10, mit einem Reaktorraum (2), der von einem fluiden Medium durchströmbar ist, wobei der Reaktorraum (2) einen für das fluide Medium durchlässigen Anströmboden (14) aus insbesondere einem feinen Gewebe - oder einem Edelstahlmaterial aufweist und der Reaktorraum (2) mit einem Produkteinlass (3) und einem Produktauslass (4) versehen ist, wobei das Produkt in dem Reaktorraum (2) von dem fluiden Medium beaufschlagbar ist und der Reaktorraum (2) einen Auslass (19) für das fluide Medium aufweist, wobei der Reaktorraum (2) in Strömungsrichtung für das fluide Medium oberhalb des Anströmbodens (14) zumindest zwei nebeneinander angeordnete, einem Auslass (19) für das fluide Medium vorgeordnete Kammern (16.1, 16.2, 16.3) aufweist und der Anströmboden (14) über einen Schwingantrieb (9) zur Förderung des Produktes vom Produkteinlass (3) zum Produktauslass (4) in Schwingungen versetzbar ist, **dadurch gekennzeichnet, dass** jeder Kammer (16.1, 16.2, 16.3) ein Absperrorgan (21.1, 21.2, 21.3) zugeordnet ist, so dass die Kammern (16.1, 16.2, 16.3) für einen Durchfluss für das fluide Medium zu öffnen und zu schließen ist, wobei bei einer über das Absperrorgan (21.1, 21.2, 21.3) zum Auslass (19) hin abgesperrten Kammer (16.1, 16.2, 16.3) das fluide Medium über eine von dem Absperrorgan (21.1, 21.2, 21.3) dieser Kammer (16.1, 16.2, 16.3) vom Auslass nicht abgesperrten anderen Kammer (16.1, 16.2, 16.3) dem Auslass (19) zugeführt wird, dass jeder Kammer (16.1, 16.2, 16.3) ein Filterelement (17.1, 17.2, 17.3) und ein Impulsgeber (22.1, 22.2, 22.3) zugeordnet sind und dass das Filterelement (17.1, 17.2, 17.3) einer Kammer (16.1, 16.2, 16.3) von dem Impulsgeber (22.1, 22.2, 22.3) dieser Kammer (16.1, 16.2, 16.3) bei geschlossenem Absperrorgan (21.1, 21.2, 21.3) in Schwingungen versetzbar ist, wobei eine Steuereinheit (24) vorgesehen ist, die den Innendruck innerhalb des Schüttguttrockners (1) oberhalb des Anströmbodens (14) und unterhalb des oder der Filterelemente(s) (17.1, 17.2, 17.3) in Abhängigkeit von vorgebbaren Betriebsparametern steuert.

11. Schüttguttrockner nach Anspruch 10, **dadurch gekennzeichnet, dass** der Impulsgeber (22.1, 22.2, 22.3) als Ultraschallerzeuger, als Drucklufterzeuger o. dgl. Vibrationserzeuger ausgebildet ist.

12. Schüttguttrockner (1) nach Anspruch 10 oder 11, **dadurch gekennzeichnet, dass** dem Reaktorraum (2) drei oder mehr Kammern (16.1, 16.2, 16.3) mit jeweiligem Absperrorgan (21.1, 21.2, 21.3) zugeordnet sind.

13. Schüttguttrockner (1) nach einem der Ansprüche 10 bis 12, **dadurch gekennzeichnet, dass** die jeweiligen Kammern (16.1, 16.2, 16.3) jeweils Kammerauslässe mit dort angeordneten Absperrorganen (21.1, 21.2, 21.3) aufweisen, die in einen gemeinsamen Auslass (19) für das fluide Medium münden.

14. Schüttguttrockner (1) nach einem der Ansprüche 11 bis 13, **dadurch gekennzeichnet, dass** die Kammern (16.1, 16.2, 16.3) jeweils ein Filterelement (17.1, 17.2, 17.3) aufweisen, das sich parallel zum Anströmboden (14) erstreckt.

15. Schüttguttrockner (1) nach Anspruch 14, **dadurch gekennzeichnet, dass** die Filterelemente (17.1, 17.2, 17.3) der jeweiligen Kammer (16.1, 16.2, 16.3) elastisch abgestützt sind.

16. Schüttguttrockner (1) nach einem der Ansprüche 10 bis 15, **dadurch gekennzeichnet, dass** die Filterelemente (17.1, 17.2, 17.3) Erhebungen und Vertiefungen aufweisen.

17. Schüttguttrockner (1) nach einem der Ansprüche 10 bis 16, **dadurch gekennzeichnet, dass** jedem Filterelement (17.1, 17.2, 17.3) ein separat ansteuerbarer Impulsgeber (22.1, 22.2, 22.3) zugeordnet ist.

18. Schüttguttrockner (1) nach einem der Ansprüche 10 bis 17, **dadurch gekennzeichnet, dass** dem Produkteinlass (3) ein Doppelschneckengranulator (11) vorgeordnet ist, der einen Anschluss (13) für eine Flüssigkeit und einen Anschluss (12) für ein pulverförmiges Produktmaterial aufweist.

19. Schüttguttrockner (1) nach einem der Ansprüche 10 bis 18, **dadurch gekennzeichnet, dass** dem Anströmboden (14) ein elektromotorischer Antrieb (9) zur Schwingungserzeugung zugeordnet ist, der den Anströmboden (14) in Schwingungen versetzt in Strömungsrichtung (15) des Produktes und quer zur Strömungsrichtung (15) des Produktes.

20. Schüttguttrockner (1) nach einem der Ansprüche 10 bis 19, **dadurch gekennzeichnet, dass** dem Anströmboden (14) des Schüttguttrockners (1) federnd ausgebildete Stützen (10) zugeordnet sind.

21. Schüttguttrockner (1) nach Anspruch 20, **dadurch gekennzeichnet, dass** die federnd ausgebildeten Stützen (10) als Spiralfedern ausgebildet sind.

22. Schüttguttrockner (1) nach Anspruch 20 oder 21, **dadurch gekennzeichnet, dass** der Schwingantrieb (9) für den Anströmboden (14) an einer Seitenwand des Reaktorraumes (2) angeordnet ist.

23. Schüttguttrockner (1) nach einem der Ansprüche 10 bis 22, **dadurch gekennzeichnet, dass** Anströmboden (14) luftdurchlässig, so dass sich auf diesem ein Festbett bildet.

24. Schüttguttrockner (1) nach einem der Ansprüche 10 bis 23, **dadurch gekennzeichnet, dass** eine Steuereinheit (24) vorgesehen ist, über die der Impulsgeber (22.1, 22.2, 22.3) der jeweiligen Kammer (16.1, 16.2, 16.3) in Abhängigkeit der Öffnungsstellung der jeweiligen Absperrorgane (21.1, 21.2, 21.3) der einzelnen Kammern (16.1, 16.2, 16.3) betätigbar ist.

25. Schüttguttrockner (1) nach einem der Ansprüche 10 bis 24, **dadurch gekennzeichnet, dass** der Anströmboden (14) als Schwingfiltersieb ausgebildet ist.

26. Schüttguttrockner (1) nach Anspruch 25, **dadurch gekennzeichnet, dass** das Schwingfiltersieb als Edelstahlfiltergewebesieb ausgebildet ist.

27. Schüttguttrockner (1) nach einem der Ansprüche 10 bis 26, **dadurch gekennzeichnet, dass** die Produktauslassöffnung (4) an eine Zellradschleuse (5) angeschlossen ist, über die die Produktausgabe erfolgt.

28. Schüttguttrockner (1) nach einem der Ansprüche 11 bis 27, **dadurch gekennzeichnet, dass** die Ultraschallerzeuger (22.1, 22.2, 22.3) der jeweiligen Kammern (16.1, 16.2, 16.3) Ultraschallwellen in einem auswählbaren Frequenzbereich erzeugen.

29. Schüttguttrockner (1) nach Anspruch 28, **dadurch gekennzeichnet, dass** die Ultraschallerzeuger (22.1, 22.2, 22.3) der jeweiligen Kammern (16.1, 16.2, 16.3) Ultraschallwellen in Abhängigkeit vorgebbarer Betriebsparameter über eine implementierte Steuerungssoftware erzeugen in einem optimierten Frequenzbereich.

30. Schüttguttrockner (1) nach Anspruch 29, **dadurch gekennzeichnet, dass** die jeweiligen Ultraschallerzeuger (22.1, 22.2, 22.3) der einzelnen Kammern (16.1, 16.2, 16.3) in vorgebbaren Betriebsintervallen während des Betriebs des Schüttguttrockners (1) Ultraschallwellen erzeugen in Abhängigkeit der Öffnungs- oder Schließstellung der Absperrorgane (21.1, 21.2, 21.3) der jeweiligen Kammer (16.1, 16.2, 16.3).

## Claims

1. Method for drying moist products, in particular moist granular material for producing pharmaceutical products, through which a fluid medium flows in a reactor chamber (2) of a bulk material dryer (1) and which are heated and are fed to an inflow plate (14) through which the fluid medium can flow, wherein the inflow plate (14) is vibrated via a vibratory drive (9) in order to convey the product from a product inlet (3) to a product outlet (4), and the fluid medium, after flowing through the inflow plate (14) and the product, is supplied to chambers (16.1, 16.2, 16.3), which are separate from one another and are arranged upstream of an outlet (19), and to the outlet (19), **characterized in that** preselectably one of at least two chambers (16.1, 16.2, 16.3) which are separate from one another is closed towards the outlet (19) by actuation of a shut-off member (21.1, 21.2, 21.3), **in that**, after actuation of the shut-off member (21.1, 21.2, 21.3), the fluid medium is supplied to the outlet (19) via a chamber (16.1, 16.2, 16.3) which is not closed by another shut-off member (21.1, 21.2, 21.3), and **in that**, after actuation of the shut-off member (21.1, 21.2, 21.3) of said chamber (16.1, 16.2, 16.3) in the closing direction, a filter element (17.1, 17.2, 17.3), which is assigned to the shut-off chamber (16.1, 16.2, 16.3), for the fluid medium is cleaned via a pulse emitter (22.1, 22.2, 22.3) with the fluid medium being continuously supplied to a chamber (16.1, 16.2, 16.3) which is not shut off, with the pressure within the bulk material dryer (1) above the inflow plate (14) and below the filter element (17.1, 17.2, 17.3) being controlled via a control device (24) depending on predefinable operating parameters.

2. Method according to Claim 1, **characterized in that** an ultrasonic generator, a compressed air generator or similar vibration generator is used as the pulse emitter (21.1, 21.2, 21.3).

3. Method according to Claim 1 or 2, **characterized in that** the fluid medium is supplied to more than two chambers (16.1, 16.2, 16.3) arranged downstream of the inflow plate (14).

4. Method according to one of Claims 1 to 3, **characterized in that** the fluid medium, before entering the outlet (19), is supplied to filter elements (17.1, 17.2, 17.3) assigned to the chambers (16.1, 16.2, 16.3), wherein the fluid medium flows through the respective filter element (17.1, 17.2, 17.3) of each chamber (16.1, 16.2, 16.3) independently of the filter element (17.1, 17.2, 17.3) of another chamber (16.1, 16.2, 16.3) while the shut-off member (21.1, 21.2, 21.3) of the respective chamber (16.1, 16.2, 16.3) is open.

5. Method according to one of Claims 1 to 4, **characterized in that** the respective filter element (17.1, 17.2, 17.3) of each chamber (16.1, 16.2, 16.3) is cleaned by an ultrasonic generator (22.1, 22.2, 22.3) assigned to said filter element (17.1, 17.2, 17.3), after actuation of the shut-off member (21.1, 21.2, 21.3) in said respective chamber (16.1, 16.2, 16.3) in the closing direction.

6. Method according to Claim 5, **characterized in that** the shut-off members (21.1, 21.2, 21.3) of the chambers (16.1, 16.2, 16.3) are alternately actuated for periods of time in the closing direction and, after actuation of the respective shut-off members (21.1, 21.2, 21.3) in the closing direction, the respective ultrasonic generator (22.1, 22.2, 22.3) of the shut-off chamber (16.1, 16.2, 16.3) is activated for a period of time.

7. Method according to one of Claims 1 to 6, **characterized in that** the inflow plate (14) is set via the vibratory drive (9) into vibrating movements in the conveying direction (15) of the product and transversely with respect to the conveying direction (15) of the product.

8. Method according to one of Claims 1 to 7, **characterized in that** the product to be fed in is supplied to the bulk material dryer (1) via a double worm granulator (11) to which a pulverulent product starting material and a liquid for generating moist granular material are supplied via inputs (12, 13) which are separate from one another.

9. Method according to one of Claims 1 to 8, **characterized in that** the dried product is supplied to a bulk material reactor outlet (4) via a cellular wheel sluice (5).

10. Bulk material dryer (1), in particular for carrying out the method according to one of Claims 1 to 10, having a reactor chamber (2) through which a fluid medium can flow, wherein the reactor chamber (2) has an inflow plate (14) which is permeable for the fluid medium and consists in particular of a fine woven fabric - or a stainless steel material, and the reactor chamber (2) is provided with a product inlet (3) and a product outlet (4), wherein the product in the reactor chamber (2) can be acted upon by the fluid medium, and the reactor chamber (2) has an outlet (19) for the fluid medium, wherein the reactor chamber (2) has above the inflow plate (14), in the flow direction for the fluid medium, at least two chambers (16.1, 16.2, 16.3) which are arranged next to one another and are arranged upstream of an outlet (19) for the fluid medium, and the inflow plate (14) can be set via a vibratory drive (9) into vibrations in order to convey the product from the product inlet (3) to the product outlet (4), **characterized in that** each chamber (16.1, 16.2, 16.3) is assigned a shut-off member (21.1, 21.2, 21.3) such that the chambers (16.1, 16.2, 16.3) can be opened for the fluid medium to flow through and can be closed, wherein, when a chamber (16.1, 16.2, 16.3) is shut off towards the outlet (19) via the shut-off member (21.1, 21.2, 21.3), the fluid medium is supplied to the outlet (19) via another chamber (16.1, 16.2, 16.3) which is not shut off from the outlet by the shut-off member (21.1, 21.2, 21.3) of said chamber (16.1, 16.2, 16.3), **in that** each chamber (16.1, 16.2, 16.3) is assigned a filter element (17.1, 17.2, 17.3) and a pulse emitter (22.1, 22.2, 22.3), and **in that** the filter element (17.1, 17.2, 17.3) of a chamber (16.1, 16.2, 16.3) can be set into vibrations by the pulse emitter (22.1, 22.2, 22.3) of said chamber (16.1, 16.2, 16.3) when the shut-off member (21.1, 21.2, 21.3) is closed, wherein a control unit (24) is provided which controls the internal pressure within the bulk material dryer (1) above the inflow plate (14) and below the filter element or the filter elements (17.1, 17.2, 17.3) depending on predefinable operating parameters.

11. Bulk material dryer according to Claim 10, **characterized in that** the pulse emitter (22.1, 22.2, 22.3) is designed as an ultrasonic generator, as a compressed air generator or similar vibration generator.

12. Bulk material dryer (1) according to Claim 10 or 11, **characterized in that** three or more chambers (16.1, 16.2, 16.3) having a respective shut-off member (21.1, 21.2, 21.3) are assigned to the reactor chamber (2).

13. Bulk material dryer (1) according to one of Claims 10 to 12, **characterized in that** the respective chambers (16.1, 16.2, 16.3) each have chamber outlets with shut-off members (21.1, 21.2, 21.3) which are arranged there and open into a common outlet (19) for the fluid medium.

14. Bulk material dryer (1) according to one of Claims 11 to 13, **characterized in that** the chambers (16.1, 16.2, 16.3) each have a filter element (17.1, 17.2, 17.3) which extends parallel to the inflow plate (14).

15. Bulk material dryer (1) according to Claim 14, **characterized in that** the filter elements (17.1, 17.2, 17.3) of the respective chambers (16.1, 16.2, 16.3) are supported elastically.

16. Bulk material dryer (1) according to one of Claims 10 to 15, **characterized in that** the filter elements (17.1, 17.2, 17.3) have elevations and depressions.

17. Bulk material dryer (1) according to one of Claims 10 to 16, **characterized in that** each filter element (17.1, 17.2, 17.3) is assigned a separately activatable pulse emitter (22.1, 22.2, 22.3).

18. Bulk material dryer (1) according to one of Claims 10 to 17, **characterized in that** a double worm granulator (11) which has a connection (13) for a liquid and a connection (12) for a pulverulent product material is arranged upstream of the product inlet (3).

19. Bulk material dryer (1) according to one of Claims 10 to 18, **characterized in that** the inflow plate (14) is assigned an electric motor drive (9) for generating vibrations, which sets the inflow plate (14) into vibrations in the flow direction (15) of the product and transversely with respect to the flow direction (15) of the product.

20. Bulk material dryer (1) according to one of Claims 10 to 19, **characterized in that** the inflow plate (14) of the bulk material dryer (1) is assigned resiliently formed supports (10).

21. Bulk material dryer (1) according to Claim 20, **characterized in that** the resiliently formed supports (10) are in the form of spiral springs.

22. Bulk material dryer (1) according to Claim 20 or 21, **characterized in that** the vibratory drive (9) for the inflow plate (14) is arranged on a side wall of the reactor chamber (2).

23. Bulk material dryer (1) according to one of Claims 10 to 22, **characterized in that** the inflow plate (14) is air-permeable, and therefore a fixed bed forms thereon.

24. Bulk material dryer (1) according to one of Claims 10 to 23, **characterized in that** a control unit (24) is provided via which the pulse emitter (22.1, 22.2, 22.3) of the respective chamber (16.1, 16.2, 16.3) is actuable depending on the opening position of the respective shut-off members (21.1, 21.2, 21.3) of the individual chambers (16.1, 16.2, 16.3).

25. Bulk material dryer (1) according to one of Claims 10 to 24, **characterized in that** the inflow plate (14) is in the form of a vibratory filter strainer.

26. Bulk material dryer (1) according to Claim 25, **characterized in that** the vibratory filter strainer is in the form of a stainless steel woven fabric filter strainer.

27. Bulk material dryer (1) according to one of Claims 10 to 26, **characterized in that** the product outlet opening (4) is connected to a cellular wheel sluice (5) via which the product is discharged.

28. Bulk material dryer (1) according to one of Claims 11 to 27, **characterized in that** the ultrasonic generators (22.1, 22.2, 22.3) of the respective chambers (16.1, 16.2, 16.3) generate ultrasonic waves in a selectable frequency range.

29. Bulk material dryer (1) according to Claim 28, **characterized in that** the ultrasonic generators (22.1, 22.2, 22.3) of the respective chambers (16.1, 16.2, 16.3) generate ultrasonic waves in an optimized frequency range via implemented control software and depending on predefinable operating parameters.

30. Bulk material dryer (1) according to Claim 29, **characterized in that** the respective ultrasonic generators (22.1, 22.2, 22.3) of the individual chambers (16.1, 16.2, 16.3) generate ultrasonic waves at predefinable operating intervals during the operation of the bulk material dryer (1) depending on the opening or closing position of the shut-off members (21.1, 21.2, 21.3) of the respective chambers (16.1, 16.2, 16.3)

## Revendications

1. Procédé de séchage de produits humides, notamment de granulats humides pour la fabrication de produits pharmaceutiques, qui sont traversés et chauffés par un milieu fluide dans une chambre de réacteur (2) d'un séchoir de matières en vrac (1) et qui sont chargés sur un fond de flux entrant (14) pouvant être traversé par le milieu fluide, le fond de flux entrant (14) étant mis en oscillations par le biais d'un entraînement oscillant (9) pour le transport du produit d'une entrée de produit (3) à une sortie de produit (4) et le milieu fluide, après avoir traversé le fond de flux entrant (14) et le produit, étant amené à des chambres (16.1, 16.2, 16.3) séparées les unes des autres, placées en amont d'une sortie (19), et à la sortie (19), **caractérisé en ce que** l'une d'au moins deux chambres (16.1, 16.2, 16.3) séparées l'une de l'autre est fermée vers la sortie (19) de manière pré-sélectionnable par actionnement d'un organe de blocage (21.1, 21.2, 21.3), **en ce qu'**après l'actionnement de l'organe de blocage (21.1, 21.2, 21.3), l'amenée du milieu fluide à la sortie (19) s'effectue par le biais d'une chambre non fermée par un autre organe de blocage (21.1, 21.2, 21.3), et **en ce qu'**un élément filtrant (17.1, 17.2, 17.3) pour le milieu fluide, associé à la chambre bloquée (16.1, 16.2, 16.3), est nettoyé après l'actionnement de l'organe de blocage (21.1, 21.2, 21.3) de cette chambre (16.1, 16.2, 16.3) dans le sens de la fermeture par le biais d'un générateur d'impulsions (22.1, 22.2, 22.3), en poursuivant l'amenée du milieu fluide à une chambre non bloquée (16.1, 16.2, 16.3), la pression à l'intérieur du séchoir de matières en vrac (1) au-dessus du fond de flux entrant (14) et en dessous de l'élément filtrant (17.1, 17.2, 17.3) étant commandée par le biais d'un appareil de commande (24) en fonction de paramètres de fonctionnement prédéfinissables.

2. Procédé selon la revendication 1, **caractérisé en ce qu'**un générateur d'ultrasons, un générateur d'air comprimé ou un générateur de vibrations similaire est utilisé en tant que générateur d'impulsions (21.1, 21.2, 21.3) .

3. Procédé selon la revendication 1 ou 2, **caractérisé en ce que** le milieu fluide est amené à plus de deux chambres (16.1, 16.2, 16.3) placées en aval du fond de flux entrant (14).

4. Procédé selon l'une quelconque des revendications 1 à 3, **caractérisé en ce qu'**avant d'entrer dans la sortie (19), le milieu fluide est amené à des éléments filtrants (17.1, 17.2, 17.3) associés aux chambres (16.1, 16.2, 16.3), l'élément filtrant respectif (17.1, 17.2, 17.3) de chaque chambre (16.1, 16.2, 16.3) étant traversé par le milieu fluide indépendamment de l'élément filtrant (17.1, 17.2, 17.3) d'une autre chambre (16.1, 16.2, 16.3) lorsque l'organe de blocage (21.1, 21.2, 21.3) de la chambre respective (16.1, 16.2, 16.3) est ouvert.

5. Procédé selon l'une quelconque des revendications 1 à 4, **caractérisé en ce que** l'élément filtrant respectif (17.1, 17.2, 17.3) de chaque chambre (16.1, 16.2, 16.3) est nettoyé par un générateur d'ultrasons (22.1, 22.2, 22.3) associé à cet élément filtrant (17.1, 17.2, 17.3) après l'actionnement de l'organe de blocage (21.1, 21.2, 21.3) dans cette chambre respective (16.1, 16.2, 16.3) dans le sens de la fermeture.

6. Procédé selon la revendication 5, **caractérisé en ce que** les organes de blocage (21.1, 21.2, 21.3) de la chambre (16.1, 16.2, 16.3) sont actionnés alternativement dans le sens de la fermeture à des intervalles de temps et, après l'actionnement de l'organe de blocage respectif (21.1, 21.2, 21.3) dans le sens de la fermeture, le générateur d'ultrasons respectif (22.1, 22.2, 22.3) de la chambre bloquée (16.1, 16.2, 16.3) est activé pendant un intervalle de temps.

7. Procédé selon l'une quelconque des revendications 1 à 6, **caractérisé en ce que** le fond de flux entrant (14) est mis en mouvements oscillants dans la direction de transport (15) du produit et transversalement à la direction de transport (15) du produit par le biais de de l'entraînement oscillant (9).

8. Procédé selon l'une quelconque des revendications 1 à 7, **caractérisé en ce que** le produit à charger est amené au séchoir de matières en vrac (1) par le biais d'un granulateur à double vis (11) auquel est amené, par le biais d'entrées séparées les unes des autres (12, 13), un matériau de départ de produit en poudre et un liquide pour produire un granulat humide.

9. Procédé selon l'une quelconque des revendications 1 à 8, **caractérisé en ce que** le produit séché est amené par le biais d'une écluse à roue cellulaire (5) à une sortie de réacteur pour matières en vrac (4).

10. Séchoir de matières en vrac (1), notamment pour la mise en œuvre du procédé selon l'une quelconque des revendications 1 à 10, avec une chambre de réacteur (2) qui peut être traversée par un milieu fluide, la chambre de réacteur (2) présentant un fond de flux entrant (14) perméable au milieu fluide, notamment en un matériau de tissu fin ou d'acier inoxydable, et la chambre de réacteur (2) étant pourvue d'une entrée de produit (3) et d'une sortie de produit (4), le produit dans la chambre de réacteur (2) pouvant être sollicité par le milieu fluide et la chambre de réacteur (2) présentant une sortie (19) pour le milieu fluide, la chambre de réacteur (2) présentant, dans la direction d'écoulement du milieu fluide, au-dessus du fond de flux entrant (14), au moins deux chambres (16.1, 16.2, 16.3)) agencées côte à côte, placées en amont d'une sortie (19) pour le milieu fluide, et le fond de flux entrant (14) pouvant être mis en oscillations par le biais d'un entraînement oscillant (9) pour le transport du produit de l'entrée de produit (3) à la sortie de produit (4), **caractérisé en ce qu'**un organe de blocage (21.1, 21.2, 21.3) est associé à chaque chambre (16.1, 16.2, 16.3), de telle sorte que les chambres (16.1, 16.2, 16.3) peuvent être ouvertes et fermées pour un passage du milieu fluide, lorsqu'une chambre (16.1, 16.2, 16.3) est bloquée vers la sortie (19) par le biais de l'organe de blocage (21.1, 21.2, 21.3), le milieu fluide étant amené à la sortie (19) par le biais d'une autre chambre (16.1, 16.2, 16.3) non bloquée de la sortie par l'organe de blocage (21.1, 21.2, 21.3) de cette chambre (16.1, 16.2, 16.3), **en ce qu'**un élément filtrant (17.1, 17.2, 17.3) et un générateur d'impulsions (22.1, 22.2, 22.3) sont associés à chaque chambre (16.1, 16.2, 16.3), et **en ce que** l'élément filtrant (17.1, 17.2, 17.3) d'une chambre (16.1, 16.2, 16.3) peut être mis en oscillations par le générateur d'impulsions (22.1, 22.2, 22.3) de cette chambre (16.1, 16.2, 16.3) lorsque l'organe de blocage (21.1, 21.2, 21.3) est fermé, une unité de commande (24) étant prévue, qui commande la pression intérieure à l'intérieur du séchoir de matières en vrac (1) au-dessus du fond de flux entrant (14) et en dessous du ou des éléments filtrants (17.1, 17.2, 17.3) en fonction de paramètres de fonctionnement prédéfinissables.

11. Séchoir de matières en vrac selon la revendication 10, **caractérisé en ce que** le générateur d'impulsions (22.1, 22.2, 22.3) est réalisé sous forme de générateur d'ultrasons, de générateur d'air comprimé ou de générateur de vibrations similaire.

12. Séchoir de matières en vrac (1) selon la revendication 10 ou 11, **caractérisé en ce que** trois chambres ou plus (16.1, 16.2, 16.3) avec un organe de blocage respectif (21.1, 21.2, 21.3) sont associées à la chambre de réacteur (2).

13. Séchoir de matières en vrac (1) selon l'une quelconque des revendications 10 à 12, **caractérisé en ce que** les chambres respectives (16.1, 16.2, 16.3) présentent chacune des sorties de chambre avec des organes de blocage (21.1, 21.2, 21.3) qui y sont agencés, qui débouchent dans une sortie commune (19) pour le milieu fluide.

14. Séchoir de matières en vrac (1) selon l'une quelconque des revendications 11 à 13, **caractérisé en ce que** les chambres (16.1, 16.2, 16.3) présentent chacune un élément filtrant (17.1, 17.2, 17.3) qui s'étend parallèlement au fond de flux entrant (14).

15. Séchoir de matières en vrac (1) selon la revendication 14, **caractérisé en ce que** les éléments filtrants (17.1, 17.2, 17.3) de la chambre respective (16.1, 16.2, 16.3) sont soutenus élastiquement.

16. Séchoir de matières en vrac (1) selon l'une quelconque des revendications 10 à 15, **caractérisé en ce que** les éléments filtrants (17.1, 17.2, 17.3) présentent des saillies et des creux.

17. Séchoir de matières en vrac (1) selon l'une quelconque des revendications 10 à 16, **caractérisé en ce qu'**à chaque élément filtrant (17.1, 17.2, 17.3) est associé un générateur d'impulsions (22.1, 22.2, 22.3) pouvant être commandé séparément.

18. Séchoir de matières en vrac (1) selon l'une quelconque des revendications 10 à 17, **caractérisé en ce qu'**un granulateur à double vis (11) est placé en amont de l'entrée de produit (3), lequel présente un raccord (13) pour un liquide et un raccord (12) pour un matériau de produit en poudre.

19. Séchoir de matières en vrac (1) selon l'une quelconque des revendications 10 à 18, **caractérisé en ce qu'**au fond de flux entrant (14) est associé un entraînement par moteur électrique (9) pour générer des oscillations, qui fait met en oscillations le fond de flux entrant (14) dans la direction d'écoulement (15) du produit et transversalement à la direction d'écoulement (15) du produit.

20. Séchoir de matières en vrac (1) selon l'une quelconque des revendications 10 à 19, **caractérisé en ce que** des soutiens (10) réalisés à ressort sont associés au fond de flux entrant (14) du séchoir de matières en vrac (1).

21. Séchoir de matières en vrac (1) selon la revendication 20, **caractérisé en ce que** les soutiens (10) réalisés à ressort sont réalisés sous forme de ressorts en spirale.

22. Séchoir de matières en vrac (1) selon la revendication 20 ou 21, **caractérisé en ce que** l'entraînement oscillant (9) pour le fond de flux entrant (14) est agencé sur une paroi latérale de la chambre de réacteur (2).

23. Séchoir de matières en vrac (1) selon l'une quelconque des revendications 10 à 22, **caractérisé en ce que** le fond de flux entrant (14) est perméable à l'air, de telle sorte qu'un lit fixe se forme sur celui-ci.

24. Séchoir de matières en vrac (1) selon l'une quelconque des revendications 10 à 23, **caractérisé en ce qu'**il est prévu une unité de commande (24) par le biais de laquelle le générateur d'impulsions (22.1, 22.2, 22.3) de la chambre respective (16.1, 16.2, 16.3) peut être actionné en fonction de la position d'ouverture des organes de blocage respectifs (21.1, 21.2, 21.3) des chambres (16.1, 16.2, 16.3) individuelles.

25. Séchoir de matières en vrac (1) selon l'une quelconque des revendications 10 à 24, **caractérisé en ce que** le fond de flux entrant (14) est réalisé sous forme de tamis filtrant oscillant.

26. Séchoir de matières en vrac (1) selon la revendication 25, **caractérisé en ce que** le tamis filtrant oscillant est réalisé sous forme de tamis tissé filtrant en acier inoxydable.

27. Séchoir de matières en vrac (1) selon l'une quelconque des revendications 10 à 26, **caractérisé en ce que** l'ouverture de sortie de produit (4) est raccordée à une écluse à roue cellulaire (5) par le biais de laquelle s'effectue le déchargement du produit.

28. Séchoir de matières en vrac (1) selon l'une quelconque des revendications 11 à 27, **caractérisé en ce que** les générateurs d'ultrasons (22.1, 22.2, 22.3) des chambres respectives (16.1, 16.2, 16.3) génèrent des ondes ultrasonores dans une plage de fréquences sélectionnable.

29. Séchoir de matières en vrac (1) selon la revendication 28, **caractérisé en ce que** les générateurs d'ultrasons (22.1, 22.2, 22.3) des chambres respectives (16.1, 16.2, 16.3) génèrent des ondes ultrasonores en fonction de paramètres de fonctionnement prédéfinissables par le biais d'un logiciel de commande mis en œuvre dans une plage de fréquences optimisée.

30. Séchoir de matières en vrac (1) selon la revendication 29, **caractérisé en ce que** les générateurs d'ultrasons respectifs (22.1, 22.2, 22.3) des chambres (16.1, 16.2, 16.3) individuelles génèrent des ondes ultrasonores à des intervalles de fonctionnement prédéfinissables pendant le fonctionnement du séchoir de matières en vrac (1) en fonction de la position d'ouverture ou de fermeture des organes de blocage (21.1, 21.2, 21.3) de la chambre respective (16.1, 16.2, 16.3).
